# EUROPEAN PATENT SPECIFICATION

(11) **EP 4 239 451 B1**
(45) Date of publication and mention of the grant of the patent: **27.05.2026**
(21) Application number: 20965420.1
(22) Date of filing: 16.12.2020
(51) Int. Cl.: H04L 12/12, H04L 12/10, G06F 1/20, G06F 1/3209, G06F 1/3246, G06F 1/3287

(54) **NETWORK DEVICE ENERGY-SAVING METHOD AND NETWORK DEVICE**
ENERGIESPARVERFAHREN FÜR NETZWERKVORRICHTUNG UND NETZWERKVORRICHTUNG
PROCÉDÉ D'ÉCONOMIE D'ÉNERGIE DE DISPOSITIF DE RÉSEAU ET DISPOSITIF DE RÉSEAU

(43) Date of publication of application: 06.09.2023
(73) Proprietor: Huawei Technologies Co., Ltd., Shenzhen, Guangdong 518129 (CN)
(72) Inventor: ZHAO, Bin, Shenzhen, Guangdong 518129 (CN); WANG, Xuepu, Shenzhen, Guangdong 518129 (CN); YU, Xiangqi, Shenzhen, Guangdong 518129 (CN)
(74) Representative: Maiwald GmbH
(86) International application number: PCT/CN2020/136655
(87) International publication number: WO 2022/126402

(56) References cited:
- CN-A- 104 143 969
- CN-A- 110 633 001
- US-A1- 2007 159 909
- US-A1- 2012 051 241
- US-A1- 2012 166 852
- US-A1- 2013 283 072
- US-A1- 2013 335 127
- US-A1- 2014 143 574
- US-A1- 2018 159 513

## Description

### TECHNICAL FIELD

This application relates to the field of communication, and more specifically, to an energy saving method for a network device and a network device.

### BACKGROUND

Small indoor base station modules, referred to as pico radio frequency retractor unit (pico RF retractor unit, pRRU) modules, are increasingly widely used in 4G/5G communication scenarios and are widely deployed for use in densely populated areas, such as shopping malls, airports, high-speed railway stations, subways, stadiums, hotels, or campuses. With the increasing shipment of products, energy saving becomes an increasingly important feature.

Currently, most indoor small cells adopt a deep dormancy solution. A central processing unit (central processing unit, CPU)/ARM (Advanced RISC Machines) microprocessor controls all other chips on a board through an enabling switch signal, so that the other chips work in a disabled or reset state, thereby reducing module power consumption in an energy saving scenario.

However, in the deep dormancy solution, shutdown is not thorough. After a network device saves energy, a secondary power supply, a tertiary power supply, the CPU/ARM, and a shutdown-uncontrollable chip still work normally. Even if a shutdown-controllable chip can be shut down, such as a field programmable gate array (field programmable gate array, FPGA), an analog to digital converter (analog to digital converter, ADC), or a digital to analog converter (digital to analog converter, DAC), a leakage current is still maintained after the shutdown. Overall power consumption of the deep dormancy is still rather high. After energy saving in the deep dormancy solution, the power consumption is greater than 10 watts (W). The US 2014143574 A1 refers to a power control system and a power control method. The US 2013283072 A1 refers to an alarm-based power saving mode for an electronic device. The US 20120166852 A1 refers to an improving of exit latency from computing device processor core deep power down.

### SUMMARY

The present invention is defined in the appended independent claims to which reference should be made. Advantageous features are set out in the appended dependent claims.

### BRIEF DESCRIPTION OF DRAWINGS

FIG. 1 is a schematic diagram of a circuit enabling a chip in a network device to be in an energy saving mode;
FIG. 2 is a schematic flowchart of an energy saving method for a network device according to an embodiment of this application;
FIG. 3 is a schematic diagram of a circuit enabling a chip in a network device to be in an energy saving mode according to an embodiment of this application;
FIG. 4 is a schematic block diagram of a network device according to an embodiment of this application; and
FIG. 5 is a schematic block diagram of a communication device according to an embodiment of this application.

### DESCRIPTION OF EMBODIMENTS

The following describes technical solutions of this application with reference to accompanying drawings.

Embodiments of this application may be applied to various communication systems, for example, a sidelink communication system (sidelink communication), a vehicle to everything (vehicle to everything, V2X) system, a wireless local area network system (wireless local area network, WLAN), a narrowband-internet of things system (narrow band-internet of things, NB-IoT), a global system for mobile communications (global system for mobile communications, GSM), an enhanced data rate for gsm evolution system (enhanced data rate for gsm evolution, EDGE), a wideband code division multiple access system (wideband code division multiple access, WCDMA), a code division multiple access 2000 system (code division multiple access, CDMA2000), a time division-synchronization code division multiple access system (time division-synchronization code division multiple access, TD-SCDMA), a long term evolution system (long term evolution, LTE), satellite communication, a 5th generation (5th generation, 5G) system, or a new communication system that appears in the future.

A terminal device in embodiments of this application may be a device that includes a wireless transceiver function and that may provide a communication service for a user. Specifically, the terminal device may be a device in a V2X system, a device in a device to device (device to device, D2D) system, a device in a machine type communication (machine type communication, MTC) system, or the like. The terminal device may include various handheld devices with a wireless communication function, in-vehicle devices, wearable devices, computing devices, or another processing device connected to a wireless modem. The terminal may be a mobile station (mobile station, MS), a subscriber unit (subscriber unit), user equipment (user equipment, UE), a cellular phone (cellular phone), a cordless phone, a session initiation protocol (session initiation protocol, SIP) phone, a wireless local loop (wireless local loop, WLL) station, a smart phone (smart phone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

Small indoor base station modules, referred to as pico radio frequency retractor unit (pico RF retractor unit, pRRU) modules, are increasingly widely used in 4G/5G communication scenarios and are widely deployed in densely populated areas, such as shopping malls, airports, high-speed railway stations, subways, stadiums, hotels, or campuses. With the increasing shipment of products, energy saving becomes an increasingly important feature.

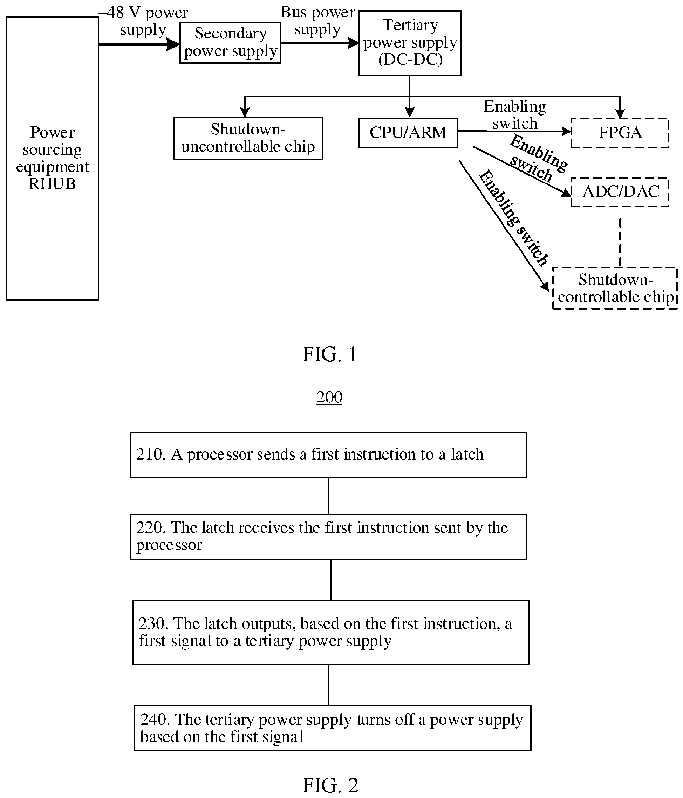

Currently, most indoor small cells adopt a deep dormancy solution. A central processing unit (central processing unit, CPU)/ARM (Advanced RISC Machines) microprocessor controls all other chips on a board through an enabling switch signal, so that other chips work in a disabled or reset state, thereby reducing module power consumption in an energy saving scenario. FIG. 1 is a schematic diagram of a circuit enabling a chip in a network device to be in an energy saving mode.

However, in the deep dormancy solution, shutdown is not thorough. After a network device saves energy, a secondary power supply, a tertiary power supply, the CPU/ARM, and a shutdown-uncontrollable chip still work normally. Even if a shutdown-controllable chip can be shut down, such as a field programmable gate array (field programmable gate array, FPGA), an analog to digital converter (analog to digital converter, ADC), or a digital to analog converter (digital to analog converter, DAC), a leakage current is still maintained after the shutdown. The overall power consumption of the deep dormancy is still rather high. After energy saving in the deep dormancy solution, the power consumption is greater than 10 watts (W). After -48 V is inputted, the communication device generally converts and outputs a 5 V to 12 V positive voltage to supply power to the board, and the power supply is generally referred to as a bus power supply. The bus power supply is converted by using a switching power supply chip, and the bus power supply is converted into a power supply that supplies power to each chip, and is generally referred to as a tertiary power supply.

In addition, power-off energy saving is further implemented by turning off a power supplying source of -48 V of the pRRU module. This energy saving solution can reduce the power consumption to a 0 W energy saving level. However, the temperature difference of the module is large each time energy saving is performed. After the module is used for a long time, reliability of a solder joint of the chip in the module is reduced, and the chip is shortcircuited due to condensation inside the module when the humidity is high. Therefore, a 10-year life requirement of the base station cannot be satisfied.

This application provides an energy saving method for a network device, to reduce power consumption of a network device in an energy saving mode. FIG. 2 is a schematic flowchart of an energy saving method for a network device according to an embodiment of this application. The network device includes a processor, a direct current power supply, a latch, and a chip. The method includes the following steps.

210. The processor sends a first instruction to the latch. The instruction instructs the latch to output a first signal, the first signal is for controlling the direct current power supply to turn off a power supply, and the direct current power supply is a power supplying source of the chip and the processor in the network device, that is, after being turned off, the direct current power supply stops supplying power to the chip and the processor. It should be understood that the direct current power supply may be a tertiary power supply.

Optionally, the first instruction may be a power-down (power-down) instruction. The processor may be a CPU or an ARM processor.

220. The latch receives the first instruction sent by the processor. Specifically, optionally, the latch stores the first instruction.

230. The latch outputs, based on the first instruction, the first signal to the direct current power supply. Optionally, the first signal may be an enabling switch signal, and the enabling switch signal is a high-level signal. The latch is a logic element having a memory function in a digital circuit. Latching is to temporarily store a signal to maintain a level state, and binary digital signals "0" and "1" may be recorded in the digital circuit. The latch is powered by a bus power supply to ensure that an output of the enabling switch signal or the high-level signal is still valid after energy saving is enabled. A specific implementation of the latch may be implemented in a manner of shifting a plurality of D flip-flops. An advantage of using this manner is that the CPU/ARM processor may control a quantity of clocks (clocks, CLKs) to control an output of an enabling switch, so as to avoid a case that a false pulse is generated during power-on and power-off to output an incorrect enabling switch and consequently the network device enters an energy saving state by mistake.

240. The direct current power supply turns off the power supply based on the first signal, to enable the network device to enter an energy saving mode.

It should be understood that, that the direct current power supply turns off the power supply may be understood as that the direct current power supply turns off an output of the power supply, and is disconnected from the power supplying source of the direct current power supply or the power supply of the direct current power supply is turned off. In this case, the chip, the processor, and the direct current power supply in the network device all stop working, so that the network device enters the energy saving mode.

According to the technical solution provided in this embodiment of this application, in an energy saving scenario, a controller controls the latch to output the first signal, so that the power supply of the direct current power supply may be turned off, and the power consumption of the network device can be reduced to a watt level.

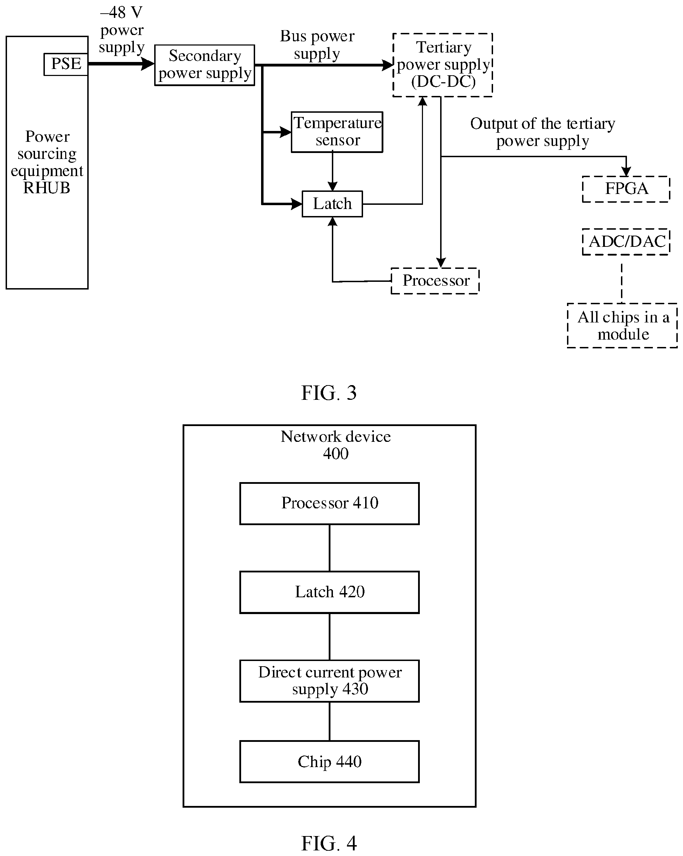

FIG. 3 is a schematic diagram of a circuit enabling a chip in a network device to be in an energy saving mode according to an embodiment of this application. When a network device is in the energy saving mode, both a chip and a processor that are powered by a tertiary power supply stop working, and the tertiary power supply is disconnected from a power supplying source of the tertiary power supply or a power supply of the tertiary power supply is turned off.

In an implementation, optionally, a power sourcing equipment (power sourcing equipment, PSE) of the network device may output a second signal, where the second signal is for controlling a latch to stop outputting a first signal. The PSE is a main power supply of the latch and a direct current power supply. The latch stops, based on the second signal, outputting the first signal. Specifically, optionally, the latch clears the stored first instruction. Optionally, the second signal may be a low-level signal. Optionally, the PSE may output a third signal, where the third signal is for controlling the direct current power supply to restore power supply. The direct current power supply may restore power supply based on the third signal, to enable the network device to exit an energy saving mode. Optionally, the third signal is a high-level signal. In this solution, when the network device needs to exit the energy saving mode, the network device may directly exit the energy saving mode.

For example, the PSE is first powered off, clears a power-down instruction in the latch, and then power-on, so that the network device is powered on again and returns to a normal working state.

According to the invention, the network device further includes a temperature sensor. The processor calculates, based on a life requirement of a module in the network device, a maximum temperature difference allowed to be borne by the module. When the network device enters the energy saving mode, the processor obtains a first temperature value of the module measured by the temperature sensor. The processor determines a threshold temperature value of the module based on the maximum temperature difference and the first temperature value. The threshold temperature value = the first temperature value - the maximum temperature difference. The processor writes the threshold temperature value into the temperature sensor. When the temperature value of the module measured by the temperature sensor is equal to the threshold temperature value, the temperature sensor controls the network device to exit the energy saving mode. The module may be any one or more of a chip, a processor, and a direct current power supply. It should be understood that different modules may bear different maximum temperature differences.

Specifically, if the temperature value of the module measured by the temperature sensor is equal to the threshold temperature value, the temperature sensor sends a second instruction to the latch. The second instruction instructs the latch to output a fourth signal, and the fourth signal is for controlling the direct current power supply to restore power supply. The second instruction may be a latch clearing instruction, and may instruct to clear the first instruction stored in the latch or stop outputting the first signal. The latch receives the second instruction sent by the temperature sensor, and outputs the fourth signal to the direct current power supply based on the second instruction. Specifically, the latch clears, based on the second instruction, the received first instruction, or stops outputting the first signal, or first clears the first instruction, then stops outputting the first signal, and finally outputs the fourth signal. The direct current power supply restores, based on the fourth signal, power supply to the processor and the chip, to enable the network device to exit the energy saving mode. The fourth signal may be a low-level signal.

For example, the processor evaluates, based on a 10-year life requirement, a temperature difference that can be borne by the module. For example, the processor evaluates that a maximum temperature difference that can be borne by a chip in the network device is 50°C. When the network device enters the energy saving mode, if the first temperature value of the chip measured by the temperature sensor is 80°C, the threshold temperature value of the temperature sensor is set to 30°C. When the temperature of the chip decreases to 30°C, the temperature sensor sends a latch clearing instruction, an enabling switch of the latch is turned off, the direct current power supply is powered on again, and the network device exits the energy saving mode and returns to the normal working state.

In this solution, a threshold temperature value may be set by using a temperature sensor. When the threshold temperature value is reached, reliability protection is triggered, and temperature difference control is performed on power-on temperature rise of a module (chip) in a network device, so that a long-term reliability life requirement of a component can be ensured.

Embodiments of this application provide a network device. FIG. 4 is a schematic block diagram of a network device 400 according to an embodiment of this application. The network device 400 includes a processor 410, a latch 420, a direct current power supply 430, and a chip 440.

The processor 410 is configured to send a first instruction to the latch. The first instruction instructs the latch to output a first signal, and the first signal is for controlling the direct current power supply 430 to turn off a power supply. The direct current power supply is a power supplying source of the chip 440 and the processor in the network device.

The latch 420 is configured to receive the first instruction sent by the processor.

The latch 420 is further configured to output, based on the first instruction, the first signal to the direct current power supply.

The direct current power supply 430 is configured to turn off the power supply based on the first signal, to enable the network device to enter the energy saving mode.

Optionally, a main power supply of the latch 420 and the direct current power supply is power sourcing equipment PSE. The PSE is configured to output a second signal, and the second signal is for controlling the latch 420 to stop outputting the first signal;
the latch 420 is further configured to stop, based on the second signal, outputting the first signal;
the PSE is further configured to output a third signal. The third signal is for controlling the direct current power supply 430 to restore power supply; and
the direct current power supply 430 is further configured to restore the power supply based on the third signal, to enable the network device to exit the energy saving mode.

Optionally, the latch 420 is specifically configured to store the first instruction. The latch 420 is further specifically configured to clear the stored first instruction.

Optionally, the first instruction is a power-down instruction, the first signal is a high-level signal, the second signal is a low-level signal, and the third signal is a high-level signal.

According to the invention, the network device further includes a temperature sensor. The processor 410 is further configured to calculate, based on a life requirement of a module in the network device, a maximum temperature difference allowed to be borne by the module. The processor 410 is further configured to obtain, when the network device enters an energy saving mode, a first temperature value of the module measured by the temperature sensor. The processor is further configured to determine, based on the maximum temperature difference and the first temperature value, a threshold temperature value of the module. The threshold temperature value = the first temperature value - the maximum temperature difference. The processor 410 is further configured to write the threshold temperature value into the temperature sensor. The temperature sensor is configured to control, when the measured temperature value of the module is equal to the threshold temperature value, the network device to exit the energy saving mode.

Optionally, the temperature sensor is specifically configured to send, when the measured temperature value of the module is equal to the threshold temperature value, a second instruction to the latch. The second instruction instructs the latch 420 to output a fourth signal, and the fourth signal is for controlling the direct current power supply to restore power supply;
the latch 420 is further configured to receive the second instruction sent by the temperature sensor;
the latch 420 is further configured to output the fourth signal to the direct current power supply based on the second instruction; and
the direct current power supply 430 is further configured to restore power supply based on the fourth signal, to enable the network device to exit the energy saving mode.

Optionally, the latch 420 is further configured to: clear the received first instruction based on the second instruction, and/or stop outputting the first signal; and output the fourth signal.

Optionally, the second instruction is a latch clearing instruction, and the fourth signal is a low-level signal.

Optionally, the module includes at least one of the following: the chip, the processor 410, and the direct current power supply 430.

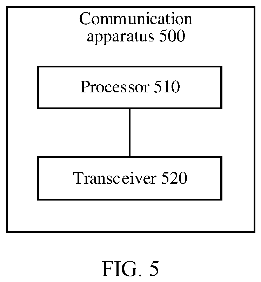

Embodiment of this application provide a communication device 500. FIG. 5 is a schematic block diagram of a communication device 500 according to an embodiment of this application.

The device 500 includes a processor 510 and a transceiver 520. The transceiver 520 is configured to receive computer code or instructions, and transmit the computer code or the instructions to the processor 510. The processor 510 runs the computer code or the instructions, for example, the method in any possible implementation of embodiments of this application.

The foregoing processor 510 may be an integrated circuit chip and has a capability of processing a signal. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Embodiments of this application further provide a computer-readable storage medium. The computer-readable storage medium stores a computer program used to implement the method in the foregoing method embodiments. When the computer program is run on a computer, the computer is enabled to implement the method in the foregoing method embodiments.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application and a computing device that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person of ordinary skill in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An energy saving method (200) for a network device (400), wherein the network device (400) comprises a processor (410), a direct current power supply (430), a latch (420), and a chip (440); the method comprises:
sending (210), by the processor (410), a first instruction to the latch (420), wherein the first instruction instructs the latch (420) to output a first signal, the first signal is for controlling the direct current power supply (430) to turn off a power supply, and the direct current power supply (430) is a power supplying source of the chip (440) and the processor (410);
receiving (220), by the latch (420), the first instruction sent by the processor (410);
outputting (230), by the latch (420), the first signal to the direct current power supply (430) based on the first instruction; and
turning off (240), by the direct current power supply (430), the power supply based on the first signal, and stopping supplying power to the chip (440) and the processor (410), to enable the network device (400) to enter an energy saving mode,
wherein the method further comprises:
outputting, by a power sourcing equipment PSE, a second signal, wherein the second signal is for controlling the latch to stop outputting the first signal, and the PSE is a main power supply of the latch (420) and the direct current power supply (430);
stopping, by the latch (420), outputting the first signal based on the second signal;
outputting, by the PSE, a third signal, wherein the third signal is for controlling the direct current power supply (430) to restore power supply;
restoring, by the direct current power supply (430), power supply based on the third signal, to enable the network device (400) to exit the energy saving mode,
wherein the network device (400) further comprises a temperature sensor, and the method further comprises:
calculating, by the processor (410) based on a life requirement of a module in the network device (400), a maximum temperature difference allowed to be borne by the module;
when the network device (400) enters the energy saving mode, obtaining, by the processor (410), a first temperature value of the module measured by the temperature sensor,
determining, by the processor (410), a threshold temperature value of the module based on the maximum temperature difference and the first temperature value, wherein the threshold temperature value is equal to the first temperature value minus the maximum temperature difference;
writing, by the processor (410), the threshold temperature value into the temperature sensor; and
controlling, by the temperature sensor, the network device (400) to exit the energy saving mode when a temperature value of the module measured by the temperature sensor is equal to the threshold temperature value.

2. The method (200) according to claim 1, wherein
the receiving, by the latch (420), the first instruction sent by the processor (410) comprises: storing, by the latch (420), the first instruction; and
the stopping, by the latch (420), outputting the first signal based on the second signal comprises: clearing, by the latch (420), the stored first instruction.

3. The method (200) according to any one of claims 1 to 2, wherein
the first instruction is a power-down instruction, the first signal is a high-level signal, the second signal is a low-level signal, and a third signal is a high-level signal.

4. The method (200) according to claim 1, wherein the controlling, by the temperature sensor, the network device (400) to exit the energy saving mode when a temperature value of the module measured by the temperature sensor is equal to the threshold temperature value comprises:
when the temperature value of the module measured by the temperature sensor is equal to the threshold temperature value, sending, by the temperature sensor, a second instruction to the latch (420), wherein the second instruction instructs the latch (420) to output a fourth signal, and the fourth signal is for controlling the direct current power supply (430) to restore power supply;
receiving, by the latch (420), the second instruction sent by the temperature sensor;
outputting, by the latch (420), the fourth signal to the direct current power supply based on the second instruction; and
restoring, by the direct current power supply (430), power supply based on the fourth signal, to enable the network device (400) to exit the energy saving mode.

5. The method according to claim 4, wherein the outputting, by the latch (420), the fourth signal to the direct current power supply (430) based on the second instruction comprises:
clearing, by the latch (420), the received first instruction based on the second instruction, and/or stopping outputting the first signal; and
outputting, by the latch (420), the fourth signal.

6. The method according to claim 4 or 5, wherein the second instruction is a latch clearing instruction, and the fourth signal is a low-level signal.

7. The method according to any one of claims 1 to 6, wherein the module comprises at least one of the following:
the chip (440), the processor (410), and the direct current power supply (430).

8. A network device (400), comprising:
a processor (410), configured to send a first instruction to a latch, wherein the first instruction instructs the latch (420) to output a first signal, the first signal is for controlling a direct current power supply (430) to turn off a power supply, and the direct current power supply (430) is a power supplying source of a chip (440) and the processor (410) in the network device (400);
the latch (420), configured to receive the first instruction sent by the processor (410);
the latch (420) is further configured to output the first signal to the direct current power supply (430) based on the first instruction; and
the direct current power supply (430) is configured to turn off the power supply based on the first signal, and stop supplying power to the chip (440) and the processor (410), to enable the network device (400) to enter an energy saving mode,
wherein a main power supply of the latch (420) and the direct current power supply (430) is power sourcing equipment PSE, wherein the PSE is configured to output a second signal, and the second signal is for controlling the latch (420) to stop outputting the first signal;
the latch (420) is further configured to stop outputting the first signal based on the second signal;
the PSE is further configured to output a third signal, wherein the third signal is for controlling the direct current power supply (430) to restore power supply; and
the direct current power supply (430) is further configured to restore power supply based on the third signal, to enable the network device (400) to exit the energy saving mode,
wherein the network device (400) further comprises a temperature sensor;
the processor (410) is further configured to calculate, based on a life requirement of a module in the network device (400), a maximum temperature difference allowed to be borne by the module;
the processor (410) is further configured to obtain, when the network device (400) enters the energy saving mode, a first temperature value of the module measured by the temperature sensor;
the processor (410) is further configured to determine a threshold temperature value of the module based on the maximum temperature difference and the first temperature value, wherein the threshold temperature value is equal to the first temperature value minus the maximum temperature difference;
the processor (410) is further configured to write the threshold temperature value into the temperature sensor; and
the temperature sensor is configured to control, when a measured temperature value of the module is equal to the threshold temperature value, the network device (400) to exit the energy saving mode.

9. The network device (400) according to claim 8, wherein
the latch (420) is specifically configured to store the first instruction; and
the latch (420) is further specifically configured to clear the stored first instruction.

10. The network device (400) according to any one of claims 8 to 9, wherein
the first instruction is a power-down instruction, the first signal is a high-level signal, the second signal is a low-level signal, and the third signal is a high-level signal.

11. The network device (400) according to claim 8, wherein
the temperature sensor is specifically configured to send, when the measured temperature value of the module is equal to the threshold temperature value, a second instruction to the latch (420), wherein the second instruction instructs the latch (420) to output a fourth signal, and the fourth signal is for controlling the direct current power supply (430) to restore power supply;
the latch (420) is further configured to receive the second instruction sent by the temperature sensor;
the latch (420) is further configured to output the fourth signal to the direct current power supply (430) based on the second instruction; and
the direct current power supply (430) is further configured to restore power supply based on the fourth signal, to enable the network device (400) to exit the energy saving mode.

## Patentansprüche

1. Energiesparverfahren (200) für ein Netzwerkgerät (400), wobei das Netzwerkgerät (400) einen Prozessor (410), eine Gleichstrom-Leistungsversorgung (430), einen Auffangspeicher (420) und einen Chip (440) umfasst; wobei das Verfahren umfasst:
Senden (210), durch den Prozessor (410), einer ersten Anweisung an den Auffangspeicher (420), wobei die erste Anweisung den Auffangspeicher (420) anweist, ein erstes Signal auszugeben, wobei das erste Signal zum Steuern der Gleichstrom-Leistungsversorgung (430) dient, eine Leistungsversorgung auszuschalten, und die Gleichstrom-Leistungsversorgung (430) eine Leistungsversorgungsquelle des Chips (440) und des Prozessors (410) ist;
Empfangen (220), durch den Auffangspeicher (420), der durch den Prozessor (410) gesandten ersten Anweisung;
Ausgeben (230), durch den Auffangspeicher (420), des ersten Signals an die Gleichstrom-Leistungsversorgung (430) basierend auf der ersten Anweisung; und
Ausschalten (240), durch die Gleichstrom-Leistungsversorgung (430), der Leistungsversorgung basierend auf dem ersten Signal und Stoppen der Zuführung von Leistung zu dem Chip (440) und dem Prozessor (410), um das Netzwerkgerät (400) in die Lage zu versetzen, in einen Energiesparmodus einzutreten,
wobei das Verfahren ferner umfasst:
Ausgeben, durch eine Leistungsbereitstellungseinrichtung PSE, eines zweiten Signals, wobei das zweite Signal zum Steuern des Auffangspeichers dient, das Ausgeben des ersten Signals zu stoppen, und die PSE eine hauptsächliche Leistungsversorgung des Auffangspeichers (420) und der Gleichstrom-Leistungsversorgung (430) ist;
Stoppen, durch den Auffangspeicher (420), des Ausgebens des ersten Signals basierend auf dem zweiten Signal,
Ausgeben, durch die PSE, eines dritten Signals, wobei das dritte Signal zum Steuern der Gleichstrom-Leistungsversorgung (430) dient, die Leistungsversorgung wiederherzustellen;
Wiederherstellen, durch die Gleichstrom-Leistungsversorgung (430), der Leistungsversorgung basierend auf dem dritten Signal, um das Netzwerkgerät (400) in die Lage zu versetzen, den Energiesparmodus zu verlassen,
wobei das Netzwerkgerät (400) ferner einen Temperatursensor umfasst und das Verfahren ferner umfasst:
Berechnen, durch den Prozessor (410) basierend auf einer Lebensdaueranforderung eines Moduls in dem Netzwerkgerät (400), einer maximal zulässigen Temperaturdifferenz, die von dem Modul getragen werden kann;
wenn das Netzwerkgerät (400) in den Energiesparmodus eintritt, Erlangen, durch den Prozessor (410), eines von dem Temperatursensor gemessenen ersten Temperaturwerts des Moduls;
Bestimmen, durch den Prozessor (410), eines Temperatur-Schwellenwerts des Moduls basierend auf der maximalen Temperaturdifferenz und dem ersten Temperaturwert, wobei der Temperatur-Schwellenwert gleich dem ersten Temperaturwert minus der maximalen Temperaturdifferenz ist;
Schreiben, durch den Prozessor (410), des Temperatur-Schwellenwerts in den Temperatursensor; und
Steuern, durch den Temperatursensor, des Netzwerkgeräts (400), den Energiesparmodus zu verlassen, wenn ein durch den Temperatursensor gemessener Temperaturwert des Moduls gleich dem Temperatur-Schwellenwert ist.

2. Verfahren (200) nach Anspruch 1, wobei
das Empfangen, durch den Auffangspeicher (420), der durch den Prozessor (410) gesandten ersten Anweisung umfasst: Speichern, durch den Auffangspeicher (420), der ersten Anweisung; und
das Stoppen, durch den Auffangspeicher (420), des Ausgebens des ersten Signals basierend auf dem zweiten Signal umfasst: Löschen, durch den Auffangspeicher (420), der gespeicherten ersten Anweisung.

3. Verfahren (200) nach einem der Ansprüche 1 bis 2, wobei
die erste Anweisung eine Anweisung zum Herunterfahren ist, das erste Signal ein hochpegeliges Signal ist, das zweite Signal ein niedrigpegeliges Signal ist und ein drittes Signal ein hochpegeliges Signal ist.

4. Verfahren (200) nach Anspruch 1, wobei das Steuern, durch den Temperatursensor, des Netzwerkgeräts (400), den Energiesparmodus zu verlassen, wenn ein durch den Temperatursensor gemessener Temperaturwert des Moduls gleich dem Temperatur-Schwellenwert ist, umfasst:
wenn der durch den Temperatursensor gemessene Temperaturwert des Moduls gleich dem Temperatur-Schwellenwert ist, Senden, durch den Temperatursensor, einer zweiten Anweisung an den Auffangspeicher (420), wobei die zweite Anweisung den Auffangspeicher (420) anweist, ein viertes Signal auszugeben, und das vierte Signal zum Steuern der Gleichstrom-Leistungsversorgung (430) dient, die Leistungsversorgung wiederherzustellen;
Empfangen, durch den Auffangspeicher (420), der durch den Temperatursensor gesandten zweiten Anweisung;
Ausgeben, durch den Auffangspeicher (420), des vierten Signals an die Gleichstrom-Leistungsversorgung basierend auf der zweiten Anweisung, und
Wiederherstellen, durch die Gleichstrom-Leistungsversorgung (430), der Leistungsversorgung basierend auf dem vierten Signal, um das Netzwerkgerät (400) in die Lage zu versetzen, den Energiesparmodus zu verlassen.

5. Verfahren nach Anspruch 4, wobei das Ausgeben, durch den Auffangspeicher (420), des vierten Signals an die Gleichstrom-Leistungsversorgung (430) basierend auf der zweiten Anweisung umfasst:
Löschen, durch den Auffangspeicher (420), der empfangenen ersten Anweisung basierend auf der zweiten Anweisung und/oder Stoppen des Ausgebens des ersten Signals; und
Ausgeben, durch den Auffangspeicher (420), des vierten Signals.

6. Verfahren nach Anspruch 4 oder 5, wobei die zweite Anweisung eine Anweisung zum Löschen des Auffangspeichers ist und das vierte Signal ein niedrigpegeliges Signal ist.

7. Verfahren nach einem der Ansprüche 1 bis 6, wobei das Modul mindestens eines des Folgenden umfasst:
den Chip (440), den Prozessor (410) und die Gleichstrom-Leistungsversorgung (430).

8. Netzwerkgerät (400), umfassend:
einen Prozessor (410), konfiguriert zum Senden einer ersten Anweisung an einen Auffangspeicher, wobei die erste Anweisung den Auffangspeicher (420) anweist, ein erstes Signal auszugeben, wobei das erste Signal zum Steuern einer Gleichstrom-Leistungsversorgung (430) ist, eine Leistungsversorgung auszuschalten, und die Gleichstrom-Leistungsversorgung (430) eine Leistungsversorgungsquelle eines Chips (440) und des Prozessors (410) in dem Netzwerkgerät (400) ist;
den Auffangspeicher (420), konfiguriert zum Empfangen der durch den Prozessor (410) gesandten ersten Anweisung;
wobei der Auffangspeicher (420) ferner konfiguriert ist, das erste Signal an die Gleichstrom-Leistungsversorgung (430) basierend auf der ersten Anweisung auszugeben; und
die Gleichstrom-Leistungsversorgung (430) konfiguriert ist zum Ausschalten der Leistungsversorgung basierend auf dem ersten Signal und Stoppen der Zuführung von Leistung zu dem Chip (440) und dem Prozessor (410), um das Netzwerkgerät (400) in die Lage zu versetzen, in einen Energiesparmodus einzutreten,
wobei eine hauptsächliche Leistungsversorgung des Auffangspeichers (420) und der Gleichstrom-Leistungsversorgung (430) eine Leistungsbereitstellungseinrichtung PSE ist, wobei die PSE konfiguriert ist, ein zweites Signal auszugeben, und das zweite Signal zum Steuern des Auffangspeichers (420) dient, das Ausgeben des ersten Signals zu stoppen;
der Auffangspeicher (420) ferner konfiguriert ist, das Ausgeben des ersten Signals basierend auf dem zweiten Signal zu stoppen;
die PSE ferner konfiguriert ist, ein drittes Signal auszugeben, wobei das dritte Signal zum Steuern der Gleichstrom-Leistungsversorgung (430) dient, die Leistungsversorgung wiederherzustellen; und
die Gleichstrom-Leistungsversorgung (430) ferner konfiguriert ist, die Leistungsversorgung basierend auf dem dritten Signal wiederherzustellen, um das Netzwerkgerät (400) in die Lage zu versetzen, den Energiesparmodus zu verlassen,
wobei das Netzwerkgerät (400) ferner einen Temperatursensor umfasst;
der Prozessor (410) ferner konfiguriert ist zum Berechnen, basierend auf einer Lebensdaueranforderung eines Moduls in dem Netzwerkgerät (400), einer maximal zulässigen Temperaturdifferenz, die von dem Modul getragen werden kann;
der Prozessor (410) ferner konfiguriert ist zum Erlangen, wenn das Netzwerkgerät (400) in den Energiesparmodus eintritt, eines von dem Temperatursensor gemessenen ersten Temperaturwerts des Moduls;
der Prozessor (410) ferner konfiguriert ist zum Bestimmen eines Temperatur-Schwellenwerts des Moduls basierend auf der maximalen Temperaturdifferenz und dem ersten Temperaturwert, wobei der Temperatur-Schwellenwert gleich dem ersten Temperaturwert minus der maximalen Temperaturdifferenz ist;
der Prozessor (410) ferner konfiguriert ist zum Schreiben des Temperatur-Schwellenwerts in den Temperatursensor; und
der Temperatursensor konfiguriert ist zum Steuern, wenn ein gemessener Temperaturwert des Moduls gleich dem Temperatur-Schwellenwert ist, des Netzwerkgeräts (400), den Energiesparmodus zu verlassen.

9. Netzwerkgerät (400) nach Anspruch 8, wobei
der Auffangspeicher (420) spezifisch konfiguriert ist zum Speichern der ersten Anweisung; und
der Auffangspeicher (420) ferner spezifisch konfiguriert ist zum Löschen der gespeicherten ersten Anweisung.

10. Netzwerkgerät (400) nach einem der Ansprüche 8 bis 9, wobei
die erste Anweisung eine Anweisung zum Herunterfahren ist, das erste Signal ein hochpegeliges Signal ist, das zweite Signal ein niedrigpegeliges Signal ist und das dritte Signal ein hochpegeliges Signal ist.

11. Netzwerkgerät (400) nach Anspruch 8, wobei
der Temperatursensor spezifisch konfiguriert ist zum Senden, wenn der gemessene Temperaturwert des Moduls gleich dem Temperatur-Schwellenwert ist, einer zweiten Anweisung an den Auffangspeicher (420), wobei die zweite Anweisung den Auffangspeicher (420) anweist, ein viertes Signal auszugeben, und das vierte Signal zum Steuern der Gleichstrom-Leistungsversorgung (430) dient, die Leistungsversorgung wiederherzustellen;
der Auffangspeicher (420) ferner konfiguriert ist zum Empfangen der durch den Temperatursensor gesandten zweiten Anweisung;
der Auffangspeicher (420) ferner konfiguriert ist, das vierte Signal an die Gleichstrom-Leistungsversorgung (430) basierend auf der zweiten Anweisung auszugeben; und die Gleichstrom-Leistungsversorgung (430) ferner konfiguriert ist, die Leistungsversorgung basierend auf dem vierten Signal wiederherzustellen, um das Netzwerkgerät (400) in die Lage zu versetzen, den Energiesparmodus zu verlassen.

## Revendications

1. Procédé (200) d'économie d'énergie pour un dispositif (400) de réseau, le dispositif (400) de réseau comportant un processeur (410), une alimentation électrique (430) en courant continu, un circuit (420) à verrouillage, et une puce (440) ; le procédé comportant :
l'envoi (210), par le processeur (410), d'une première instruction au circuit (420) à verrouillage, la première instruction ordonnant au circuit (420) à verrouillage de délivrer un premier signal, le premier signal servant à commander l'alimentation électrique (430) en courant continu pour couper une alimentation électrique, et l'alimentation électrique (430) en courant continu étant une source d'alimentation électrique de la puce (440) et du processeur (410) :
la réception (220), par le circuit (420) à verrouillage, de la première instruction envoyée par le processeur (410) ;
la délivrance (230), par le circuit (420) à verrouillage, du premier signal à l'alimentation électrique (430) en courant continu sur la base de la première instruction ; et
la coupure (240), par l'alimentation électrique (430) en courant continu, de l'alimentation électrique sur la base du premier signal, et l'arrêt de l'alimentation électrique de la puce (440) et du processeur (410), pour permettre au dispositif (400) de réseau d'entrer dans un mode d'économie d'énergie,
le procédé comportant en outre :
la délivrance, par un équipement d'approvisionnement en électricité, PSE, d'un deuxième signal, le deuxième signal servant à commander le circuit à verrouillage pour arrêter de délivrer le premier signal, et le PSE étant une alimentation électrique principale du circuit (420) à verrouillage et de l'alimentation électrique (430) en courant continu :
l'arrêt, par le circuit (420) à verrouillage, de la délivrance du premier signal sur la base du deuxième signal ;
la délivrance, par le PSE, d'un troisième signal, le troisième signal servant à commander l'alimentation électrique (430) en courant continu pour rétablir l'alimentation électrique ;
le rétablissement, par l'alimentation électrique (430) en courant continu, de l'alimentation électrique sur la base du troisième signal, pour permettre au dispositif (400) de réseau de sortir du mode d'économie d'énergie,
le dispositif (400) de réseau comportant en outre un capteur de température, et le procédé comportant en outre :
le calcul, par le processeur (410) sur la base d'une exigence de durée de vie d'un module dans le dispositif (400) de réseau, d'une différence maximale de température que le module est autorisé à supporter ;
lorsque le dispositif (400) de réseau entre dans le mode d'économie d'énergie, l'obtention, par le processeur (410), d'une première valeur de température du module mesurée par le capteur de température ;
la détermination, par le processeur (410), d'une valeur seuil de température du module d'après la différence maximale de température et la première valeur de température, la valeur seuil de température étant égale à la première valeur de température moins la différence maximale de température ;
l'écriture, par le processeur (410), de la valeur seuil de température dans le capteur de température ; et
la commande, par le capteur de température, du dispositif (400) de réseau pour sortir du mode d'économie d'énergie lorsqu'une valeur de température du module mesurée par le capteur de température est égale à la valeur seuil de température.

2. Procédé (200) selon la revendication 1,
la réception, par le circuit (420) à verrouillage, de la première instruction envoyée par le processeur (410) comportant : le stockage, par le circuit (420) à verrouillage, de la première instruction ; et
l'arrêt, par le circuit (420) à verrouillage, de la délivrance du premier signal sur la base du deuxième signal comportant : l'effacement, par le circuit (420) à verrouillage, de la première instruction stockée.

3. Procédé (200) selon l'une quelconque des revendications 1 à 2,
la première instruction étant une instruction de mise hors tension, le premier signal étant un signal de niveau haut, le deuxième signal étant un signal de niveau bas, et un troisième signal étant un signal de niveau haut.

4. Procédé (200) selon la revendication 1, la commande, par le capteur de température, du dispositif (400) de réseau pour sortir du mode d'économie d'énergie lorsqu'une valeur de température du module mesurée par le capteur de température est égale à la valeur seuil de température comportant :
lorsque la valeur de température du module mesurée par le capteur de température est égale à la valeur seuil de température, l'envoi, par le capteur de température, d'une deuxième instruction au circuit (420) à verrouillage, la deuxième instruction ordonnant au circuit (420) à verrouillage de délivrer un quatrième signal, et le quatrième signal servant à commander l'alimentation électrique (430) en courant continu pour rétablir l'alimentation électrique ;
la réception, par le circuit (420) à verrouillage, de la deuxième instruction envoyée par le capteur de température ;
la délivrance, par le circuit (420) à verrouillage, du quatrième signal à l'alimentation électrique en courant continu sur la base de la deuxième instruction ; et
le rétablissement, par l'alimentation électrique (430) en courant continu, de l'alimentation électrique sur la base du quatrième signal, pour permettre au dispositif (400) de réseau de sortir du mode d'économie d'énergie.

5. Procédé selon la revendication 4, la délivrance, par le circuit (420) à verrouillage, du quatrième signal à l'alimentation électrique (430) en courant continu sur la base de la deuxième instruction comportant :
l'effacement, par le circuit (420) à verrouillage, de la première instruction reçue sur la base de la deuxième instruction, et/ou l'arrêt de la délivrance du premier signal ; et
la délivrance, par le circuit (420) à verrouillage, du quatrième signal.

6. Procédé selon la revendication 4 ou 5, la deuxième instruction étant une instruction de remise à zéro de verrouillage, et le quatrième signal étant un signal de niveau bas.

7. Procédé selon l'une quelconque des revendications 1 à 6, le module comportant au moins un des éléments suivants :
la puce (440), le processeur (410) et l'alimentation électrique (430) en courant continu.

8. Dispositif (400) de réseau, comportant :
un processeur (410), configuré pour envoyer une première instruction à un circuit à verrouillage, la première instruction ordonnant au circuit (420) à verrouillage de délivrer un premier signal, le premier signal servant à commander une alimentation électrique (430) en courant continu pour couper une alimentation électrique, et l'alimentation électrique (430) en courant continu étant une source d'alimentation électrique d'une puce (440) et du processeur (410) dans le dispositif (400) de réseau ;
le circuit (420) à verrouillage, configuré pour recevoir la première instruction envoyée par le processeur (410) ;
le circuit (420) à verrouillage étant en outre configuré pour délivrer le premier signal à l'alimentation électrique (430) en courant continu sur la base de la première instruction ; et
l'alimentation électrique (430) en courant continu étant configurée pour couper l'alimentation électrique sur la base du premier signal, et arrêter d'alimenter en électricité la puce (440) et le processeur (410), pour permettre au dispositif (400) de réseau d'entrer dans un mode d'économie d'énergie,
une alimentation électrique principale du circuit (420) à verrouillage et de l'alimentation électrique (430) en courant continu étant un équipement d'approvisionnement en électricité, PSE, le PSE étant configuré pour délivrer un deuxième signal, et le deuxième signal servant à commander le circuit (420) à verrouillage pour arrêter de délivrer le premier signal ;
le circuit (420) à verrouillage étant en outre configuré pour arrêter de délivrer le premier signal sur la base du deuxième signal ;
le PSE étant en outre configuré pour délivrer un troisième signal, le troisième signal servant à commander l'alimentation électrique (430) en courant continu pour rétablir l'alimentation électrique ; et
l'alimentation électrique (430) en courant continu étant en outre configurée pour rétablir l'alimentation électrique sur la base du troisième signal, pour permettre au dispositif (400) de réseau de sortir du mode d'économie d'énergie,
le dispositif (400) de réseau comportant en outre un capteur de température ;
le processeur (410) étant en outre configuré pour calculer, sur la base d'une exigence de durée de vie d'un module dans le dispositif (400) de réseau, une différence maximale de température que le module est autorisé à supporter ;
le processeur (410) étant en outre configuré pour obtenir, lorsque le dispositif (400) de réseau entre dans le mode d'économie d'énergie, une première valeur de température du module mesurée par le capteur de température ;
le processeur (410) étant en outre configuré pour déterminer une valeur seuil de température du module d'après la différence maximale de température et la première valeur de température, la valeur seuil de température étant égale à la première valeur de température moins la différence maximale de température ;
le processeur (410) étant en outre configuré pour écrire la valeur seuil de température dans le capteur de température ; et
le capteur de température étant configuré pour commander, lorsqu'une valeur de température mesurée du module est égale à la valeur seuil de température, le dispositif (400) de réseau pour sortir du mode d'économie d'énergie.

9. Dispositif (400) de réseau selon la revendication 8,
le circuit (420) à verrouillage étant spécifiquement configuré pour stocker la première instruction ; et
le circuit (420) à verrouillage étant en outre spécifiquement configuré pour effacer la première instruction stockée.

10. Dispositif (400) de réseau selon l'une quelconque des revendications 8 à 9,
la première instruction étant une instruction de mise hors tension, le premier signal étant un signal de niveau haut, le deuxième signal étant un signal de niveau bas, et le troisième signal étant un signal de niveau haut.

11. Dispositif (400) de réseau selon la revendication 8,
le capteur de température étant spécifiquement configuré pour envoyer, lorsque la valeur de température mesurée du module est égale à la valeur seuil de température, une deuxième instruction au circuit (420) à verrouillage, la deuxième instruction ordonnant au circuit (420) à verrouillage de délivrer un quatrième signal, et le quatrième signal servant à commander l'alimentation électrique (430) en courant continu pour rétablir l'alimentation électrique ;
le circuit (420) à verrouillage étant en outre configuré pour recevoir la deuxième instruction envoyée par le capteur de température ;
le circuit (420) à verrouillage étant en outre configuré pour délivrer le quatrième signal à l'alimentation électrique (430) en courant continu sur la base de la deuxième instruction ; et
l'alimentation électrique (430) en courant continu étant en outre configurée pour rétablir l'alimentation électrique sur la base du quatrième signal, pour permettre au dispositif (400) de réseau de sortir du mode d'économie d'énergie.
